# EUROPÄISCHE PATENTSCHRIFT

(11) **EP 2 935 091 B1**
(45) Veröffentlichungstag und Bekanntmachung des Hinweises auf die Patenterteilung: **21.02.2018**
(21) Anmeldenummer: 13796071.2
(22) Anmeldetag: 27.11.2013
(51) Int. Cl.: C01B 6/00, C01B 3/00, C01B 33/04, C01B 33/107

(54) **VERFAHREN ZUM HYDRIEREN HÖHERER HALOGEN-HALTIGER SILANVERBINDUNGEN**
METHOD FOR HYDROGENATING HIGHER HALOGEN-CONTAINING SILANE COMPOUNDS
PROCÉDÉ D'HYDROGÉNATION DE COMPOSÉS DE SILANE HALOGÉNÉS SUPÉRIEURS

(30) Priorität: 21.12.2012 DE 102012224202
(43) Veröffentlichungstag der Anmeldung: 28.10.2015
(73) Patentinhaber: Evonik Degussa GmbH, 45128 Essen (DE)
(72) Erfinder: OH, Min-Zae, 50968 Köln (DE); HAUBROCK, Jens, 48249 Dülmen (DE); SCHWÄRTZKE, Thorsten, 48151 Münster (DE); MOUSSALLEM, Imad, 63457 Hanau (DE); TROCHA, Martin, 45136 Essen (DE)
(86) Internationale Anmeldenummer: PCT/EP2013/074877
(87) Internationale Veröffentlichungsnummer: WO 2014/095278

(56) Entgegenhaltungen:
- WO-A1-2012/084897
- WO-A1-2012/087653
- JP-A- 2000 256 367
- US-A- 4 601 798
- US-A- 4 725 419
- US-A1- 2011 158 883

## Beschreibung

Die vorliegende Erfindung betrifft ein kontinuierliches Verfahren zum Hydrieren höherer Halogen-haltiger Silanverbindungen zu höheren Hydridosilanverbindungen. Insbesondere betrifft die vorliegende Erfindung die Hydrierung von Dodekachlorneopentasilan zu Neopentasilan.

Hydridosilane und Hydridosilanverbindungen sind in der Literatur als mögliche Edukte für die Erzeugung von Siliciumschichten beschrieben. Dabei sind unter Hydridosilanen Verbindungen zu verstehen, die im Wesentlichen lediglich Silicium- und Wasserstoffatome enthalten. Hydridosilanverbindungen können neben Silicium- und Wasserstoffatomen auch noch weitere Reste, insbesondere Alkylreste, Boraalkylreste, Phosphaalkylreste, -BH₂-Reste oder PH₂-Reste aufweisen. Hydridosilane können gasförmig, flüssig oder fest sein und sind - im Falle von Feststoffen - im Wesentlichen löslich in Lösemitteln wie Toluol oder Cyclohexan oder in flüssigen Silanen wie Cyclopentasilan. Als Beispiele seien Monosilan, Disilan, Trisilan, Cyclopentasilan und Neopentasilan genannt. Hydridosilane mit mindestens drei bzw. vier Siliciumatomen können eine lineare, verzweigte oder (ggf. bi-/poly-)cyclische Struktur mit Si-H-Bindungen aufweisen und lassen sich durch die jeweiligen generischen Formeln SiₙH₂ₙ₊₂ (linear bzw. verzweigt; mit n ≥ 2), SiₙH₂ₙ (cyclisch; mit n ≥ 3) oder SiₙH₂₍ₙ₋ᵢ₎ (bi- bzw. polycyclisch; n ≥ 4; i = {Zahl der Cyclen}- 1) beschreiben. Hydridosilane mit mindestens drei Siliciumatomen werden als höhere Hydridosilane bezeichnet. Sie haben aufgrund ihres flüssigen oder festen Aggregatzustandes den Vorteil, dass bei ihrer Herstellung keine Hochdruckverfahren zum Einsatz kommen müssen, sondern dass stattdessen in technisch einfacher zu handhabenden flüssigen oder festen Phasen gearbeitet werden kann. Weiterhin haben höhere Hydridosilane und höhere Hydridosilanverbindungen den Vorteil, dass mit ihnen gute Silicium-haltige Schichten über Flüssigphasenverfahren hergestellt werden können.

Viele Verfahren zur Herstellung höherer Hydridosilane beruhen auf einer Dehydropolymerisationsreaktion von niederen Hydridosilanen, insbesondere SiH₄, zu höheren Silanen unter formaler H₂-Abspaltung. Die Dehydropolymerisationsreaktion kann dabei 1) thermisch (US 6,027,705 A für den Fall, dass kein Katalysator eingesetzt wird) und/oder 2) durch Einsatz von Katalysatoren wie a) elementaren Übergangsmetallen (heterogene Katalyse; US 6,027,705 A für den Fall, dass Platingruppen-Metalle, d.h. Ru, Rh, Pd, Os, Ir, Pt, eingesetzt werden; US 5,700,400 A für Metalle der Gruppe 3B - 7B und 8 - d.h. die Übergangsmetalle/Lanthanide ohne Cu- und Zn-Gruppe), b) Nichtmetalloxiden (heterogene Katalyse; US 6,027,705 A für den Fall, dass Al₂O₃ oder SiO₂ eingesetzt werden), c) hydridischen Cyclopentadienyl-Komplexen von Scandium, Yttrium oder seltenen Erden (homogene Katalyse; US 4,965,386 A, US 5,252,766 A), d) Übergangsmetall-Komplexen (homogene Katalyse; US 5,700,400 A für Komplexe der Metalle der Gruppe 3B - 7B und 8 - d.h. die Übergangsmetalle/Lanthanide ohne Cu- und Zn-Gruppe; JP 02-184513 A) oder e) bestimmten auf einem Träger immobilisierten Übergangsmetallen (heterogene Katalyse; US 6,027,705 A für den Fall, dass Platingruppen-Metalle auf einem Träger wie z. B. SiO₂ eingesetzt werden, US 5,700,400 A für auf Kohlenstoff, SiO₂ oder Al₂O₃ immobilisiertes Ruthenium, Rhodium, Palladium oder Platin) oder Übergangsmetallkomplexen (heterogene Katalyse, US 6,027,705 A für den Fall, dass Platingruppen-Metallkomplexe auf einem Träger wie z. B. SiO₂ eingesetzt werden) durchgeführt werden. All diese Verfahren weisen jedoch den Nachteil auf, dass die eingesetzten niederen Hydridosilane selbst erst aufwändig hergestellt werden müssen. Weiterhin ist an diesen Verfahren nachteilig, dass sie aufgrund der Selbstentzündlichkeit der Edukte einen hohen apparativen Aufwand erfordern. Schließlich konnten mit diesen Verfahren bislang keine ausreichend hohen Ausbeuten realisiert werden. Weiterhin ist eine aufwändige Reinigung erforderlich.

Ein anderes Verfahren zur Herstellung höherer Hydridosilane, bei dem Dihalosilane, ggf. zusammen mit Trihalosilanen und/oder Tetrahalosilanen, auf elektrochemischem Wege umgesetzt werden, beschreibt z. B. EP 0 673 960 A1. Auch dieses Verfahren hat jedoch den Nachteil, dass es aufgrund der elektrochemischen Reaktionsführung einen hohen apparativen Aufwand und weiterhin hohe Energiedichten erfordert. Schließlich sind auch hier zuvor die jeweiligen Di- bzw. Trihalosilane erst aufwändig herzustellen.

Alternativ können höhere Hydridosilane auch durch Dehalogenierung und Polykondensation von Halosilanen mit Alkalimetallen hergestellt werden (GB 2 077 710 A). Dieses Verfahren führt jedoch zu nicht ausreichend hohen Ausbeuten. Weiterhin ist dies Verfahren nur wenig selektiv.

Eine gegenüber den bisher geschilderten Synthesen bevorzugte Synthese höherer Hydridosilanverbindungen besteht in der Hydrierung von Halogen-haltigen Silanverbindungen, insbesondere von Halogensilanen.

Die Synthese Halogen-haltiger Silanverbindungen gehört zum Stand der Technik. Auch sind bereits verschiedene Möglichkeiten ihrer Hydrierung zu Hydridosilanen im Stand der Technik beschrieben.

Den katalytischen Aufbau höherer Chlorsilane aus niederen Chlorsilanen, insbesondere den Aufbau von Pentasiliciumdodekachlorid (dem Chloranalogen von Neopentasilan, Si(SiH₃)₄), beschreibt z.B. A. Kaczmarczyk et al., J. Inorg. Nucl. Chem., 1964, Vol. 26, 421-425 bzw. G. Urry, J. Inorg. Nucl. Chem., 1964, Vol. 26, 409-414. So lehrt A. Kaczmarczyk et al., J. Inorg. Nucl. Chem., 1964, Vol. 26, 421-425 die Synthese von Pentasiliciumdodekachlorid aus Hexachlordisilan unter Entstehung von Tetrachlorsilan. Weiterhin wird dort beschrieben, dass bei einem entsprechenden Einsatz von Octachlortrisilan Pentasiliciumdodekachlorid und Hexachlordisilan entsteht. Bei dem dort eingesetzten Katalysator handelt es sich um Trimethylamin. G. Urry, J. Inorg. Nucl. Chem., 1964, Vol. 26, 409-414 lehren die trimethylaminkatalysierte Synthese von Pentasiliciumdodekachlorid aus Hexachlordisilan unter Entstehung von Tetrachlorsilan bzw. aus Octachlortrisilan unter Entstehung von Hexachlordisilan. Die Hydrierung der Produkte zu Hydridosilanen wird dort jedoch nicht beschrieben.

DE 195 02 550 A1 und JP S63-008207 A1 beschreiben die Hydrierung von Siliciumtetrachlorid mit Wasserstoffgas zur Monosilan. Diese Verfahren erfordern jedoch Temperaturen von 600° C und mehr und müssen unter Druck durchgeführt werden. Wasserstoffgas ist weiterhin in der Handhabung aufwändig und somit nachteilig. Schließlich wird die Eignung dieser Methode zur Bildung höherer Hydridosilane nicht offenbart.

EP 2 132 137 A1 beschreibt ein Verfahren zur katalytischen Hydrierung von Siliciumhalogeniden zu Monosilan bzw. halogenierten Monosilanderivaten oder höheren Hydridosilanen bzw. höheren halogenierten Hydridosilanverbindungen, bei dem in einem ersten Schritt ein Lewis-Säure-Base-Paar unter Zugabe von H₂ hydriert wird, das in einem zweiten Schritt zur Hydrierung eingesetzt wird und in einem dritten Schritt unter Abscheidung von Halogenwasserstoff regeneriert wird. Bei dem Verfahren handelt es sich um ein Batchverfahren. Diese Verfahren haben den Nachteil, dass nach Abschluss der Reaktion das Produkt von den ebenfalls entstehenden Nebenprodukten separiert werden muss und eine Reinigung der Apparatur erforderlich ist. Während dieser Zeit steht das Reaktionsbehältnis nicht für eine erneute Synthese zur Verfügung. Weiterhin ist nachteilig, dass das Verfahren nicht zu ausreichend hohen Ausbeuten führt.

US 4,601,798 A beschreibt ein kontinuierliches Verfahren zu Herstellung von SiH₄, bei dem u.a. eine Hydrierung von SiCl₄ zu SiH₄ mit Metallhydriden wie Lithiumhydrid durchgeführt wird. Die Eignung dieses Verfahrens für höhere Halogensilane ist dort nicht offenbart. An dem offenbarten Verfahren ist weiterhin nachteilig, dass es in einer Salzschmelze und somit mit großem apparativen Aufwand durchgeführt wird. Nachteilig ist ebenfalls, dass die Aufarbeitung des entstehenden Lithiumchlorids elektrochemisch und somit aufwändig und energieintensiv erfolgt.

JP 2003-119200 A offenbart die Reduktion von halogenhaltigen Monosilanderivaten oder höheren halogenhaltigen Silanen mit Natriumborhydrid. Nachteilig ist jedoch auch hier, dass es sich hierbei um einen Batchprozess handelt. Weiterhin führt das beschriebene Verfahren nur zu geringen Ausbeuten und einer großen Menge an Nebenprodukten, die aufwändig entfernt werden müssen.

WO 2008/051328 A1 lehrt, zur Erzeugung Neopentasilan-haltiger Zusammensetzungen ein Hexahalodisilan der Formel X₃SiSiX₃ mit einem tertiären Aminkatalysator unter Bildung einer ersten Mischung umfassend Tetrakis(trihalosilyl)silan (Si(SiX₃)₄) und Tetrahalosilan umzusetzen. Die beiden Hauptbestandteile Tetrakis(trihalosilyl)silan und Tetrahalosilan können voneinander separiert werden. Das erhaltene Tetrakis(trihalosilyl)silan kann durch Hydrierung mit Diisobutylaluminiumhydrid in Neopentasilan (Si(SiH₃)₄) umgewandelt werden. Bei dem dort offenbarten Hydrierverfahren handelt es sich um ein Batch-Verfahren. Weiterhin hat dies Verfahren den Nachteil, zu nicht ausreichend hohen Ausbeuten in Bezug auf das eingesetzte Halogensilan zu führen.

Auch DE 10 2009 053 804 A1 und DE 10 2010 063 823 A1 beschreiben Verfahren zur Herstellung höherer Hydridosilane, insbesondere Neopentasilan. Bei dem Verfahren gemäß DE 10 2009 053 804 A1 wird mindestens ein Halogensilan der generischen Formel SiₙX₂ₙ₊₂ und mindestens ein Katalysator unter Bildung eines Gemisches umfassend mindestens ein Halogensilan der generischen Formel SiₘX₂ₘ₊₂ (mit m > n und X = F, Cl, Br und/oder I) und SiX₄ (mit X = F, Cl, Br und/oder I) umgesetzt, und das mindestens eine Halogensilan der generischen Formel SiₘX₂ₘ₊₂ unter Bildung eines Hydridosilans der generischen Formel SiₘH₂ₘ₊₂ hydriert. Bei dem Verfahren gemäß DE 102010063823 A1 wird entstandenes Hydridosilan von ebenfalls entstehenden partiell halogenierten Hydridosilanen abgetrennt und letztere werden optional erneut hydriert. Nachteilig hierbei ist jedoch, dass aufgrund des zusätzlichen Hydrierschrittes nun in zwei Hydrierschritten oxidiertes Hydriermittel als Abfall anfällt, das entweder das Reaktionsprodukt verunreinigt bzw. verdünnt oder aufwändig abgetrennt und entsorgt werden muss.

Die Aufgabe der vorliegenden Erfindung ist es somit, die Nachteile des Standes der Technik zu vermeiden. Insbesondere ist es Aufgabe der vorliegenden Erfindung, ein Verfahren zur Hydrierung höherer Halogen-haltiger Hydridosilanverbindungen bereitzustellen, das unter Einsatz einfach zu handhabender Techniken und unter besonders hohen Ausbeuten zu Hydridosilanverbindungen führt.

Diese Aufgabe wird vorliegend gelöst durch ein kontinuierliches Verfahren zum Hydrieren Halogen-haltiger Silanverbindungen mit mindestens drei Siliciumatomen, bei dem
- mindestens eine Halogen-haltige Silanverbindung mit mindestens drei Siliciumatomen und
- mindestens ein Hydriermittel, ausgewählt aus der Gruppe an Verbindungen bestehend aus LiAlH₄, NaBH₄ und i-Bu₂AlH
- kontinuierlich
   unter Bildung
- mindestens einer Hydridosilanverbindung mit mindestens drei Siliciumatomen und
- oxidierten Hydriermittels
   umgesetzt werden,
- bei dem oxidiertes Hydriermittel entnommen, reduziert und das Reaktionsprodukt dieser Reduktionsreaktion der Hydrierung wieder zugeführt wird.

Unter den erfindungsgemäß einzusetzenden Halogen-haltigen Silanverbindungen können bevorzugt lineare, verzweigte oder cyclische Verbindungen der Formeln SiₙX_{2n+2-z}Y_{z} (mit n ≥ 3; 0 ≤ z ≤ 2n; X = F, Cl, Br, I; Y = H, C₁-C₁₀-Alkyl, BH₂, PH₂) bzw. SiₙX_{2n-z}Y_{z} (mit n ≥ 4; 0 ≤ z ≤ 2n-2; X = F, Cl, Br, I; Y = H, C₁-C₁₀-Alkyl, BH, PH) verstanden werden. Die Bezeichnungen "linear", "verzweigt" bzw. "cyclisch" sind dabei als Angaben betreffend die Anordnung der Siliciumatome zu verstehen. Unter "C₁-C₁₀-Alkyl"-Resten sind weiterhin hier und im Folgenden Alkylreste mit 1 bis 10 Kohlenstoffatomen zu verstehen, die ggf. wiederum Bor- oder Phosphoratome aufweisen können.

Besonders gut lässt sich das erfindungsgemäße Verfahren mit Halogen-haltigen Silanverbindungen der generischen Formel SiₙX₂ₙ₊₂ mit 3 ≤ n ≤ 10 und X = F, Cl, Br, I durchführen. Ein unter anderem dabei resultierende Vorteil ist, dass die hierbei jeweils entstehenden Produkte SiₙH₂ₙ₊₂ flüssig sind und besonders einfach abgetrennt werden können. Besonders gut steuerbar ist die Reaktion, wenn als Edukt Si₅Cl₁₂ (Dodekachlorneopentasilan) eingesetzt wird.

Der Anteil der eingesetzten mindestens einen Halogen-haltigen Silanverbindung an den zugeführten Eduktströmen vor Beginn der Hydrierung beträgt vorzugsweise 10 - 30 Gew.-%, besonders bevorzugt 15 - 27 Gew.-% bezogen auf die Gesamtmasse der zugeführten Komponenten (insbesondere Halogen-haltige Silanverbindung, Hydriermittel und ggf. anwesendes Lösemittel). So kann eine besonders gute Reaktionsausbeute erzielt werden. Weiterhin kann bei diesen Werten die Reaktionszusammensetzung eine besonders gute Viskosität aufweisen.

Die Halogen-haltige Silanverbindung wird mit mindestens einem Hydriermittel ausgewählt aus der Gruppe an Verbindungen bestehend aus LiAlH₄, NaBH₄ und i-Bu₂AlH umgesetzt. Insbesondere für die Hydrierung von Dodekachlorneopentasilan resultieren höchste Ausbeuten, wenn als Hydriermittel i-Bu₂AlH eingesetzt wird. Weiterhin hat i-Bu₂AlH den Vorteil, im Falle einer gewünschten Durchführung der Reaktion in der flüssigen Phase ohne den Zusatz von Lösemittel eingesetzt werden zu können.

Besonders gute Ausbeuten resultieren, wenn das Hydriermittel im reduzierten Zustand in H-Äquivalent-Anteilen von 1,0 bis 1,5 bezogen auf die Summe an zu hydrierenden Halogenatomen zudosiert wird.

Die Hydrierung des halogen-haltigen Silans erfolgt bevorzugt bei Temperaturen von -78 bis 300 °C und Drücken von 1 mbar bis 40 bar. Besonders bevorzugt erfolgt die Hydrierung des halogen-haltigen Silans bei - 25 °C bis + 25 °C und 0,9 bis 5 bar.

Die mindestens eine Halogen-haltige Silanverbindung kann ohne Lösemittel oder in einem Lösemittel gelöst oder suspendiert für die Hydrierung eingesetzt werden. Bevorzugt, da dies die Reaktionsgeschwindigkeit erhöht, wird die Halogen-haltige Silanverbindung ohne separate Zugabe eines Lösemittels eingesetzt. Weiter bevorzugt wird für die Hydrierung der Halogenhaltigen Silanverbindung ein Hydriermittel eingesetzt, das im oxidierten und/oder reduzierten Zustand flüssig vorliegt und somit die Halogen-haltige Silanverbindung suspendieren bzw. lösen kann.

Das erfindungsgemäße Verfahren ist ein kontinuierliches Verfahren. In einem kontinuierlichen Verfahren werden die Edukte und ggf. Lösungsmittel z.B. mit Kompressoren oder Pumpen ununterbrochen, also kontinuierlich, in das Reaktionsbehältnis eingefüllt. Nach einer bestimmten Zeit werden die gebildeten Produkte stetig, also kontinuierlich, dem Reaktionsbehältnis entnommen.

Für die erfindungsgemäße Reaktion kann im Prinzip jedes beliebige für eine kontinuierliche Reaktionsdurchführung geeignete Reaktionsbehältnis eingesetzt werden. Die Reaktion kann in einem einzigen Reaktor oder auch in einer Kombination mehrerer in Reihe geschalteter Reaktoren durchgeführt werden.

Bevorzugt wird das Verfahren so durchgeführt, dass mindestens zwei in Reihe geschaltete Reaktoren eingesetzt werden. So können mit einfachen Techniken besonders hohe Ausbeuten erzielt werden.

Weiter bevorzugt wird das Verfahren im Falle eines Einsatzes mindestens zweier Reaktoren so durchgeführt, dass in dem ersten Reaktor das Molverhältnis von reduziertem zu oxidiertem Hydriermittel einen Wert zwischen 0,4 und 0,75, bevorzugt 0,5 und 0,65, besonders bevorzugt zwischen 0,55 und 0,6 beträgt. Die Wahl einer Untergrenze von 0,4, mehr noch von 0,5, ganz besonders von 0,55, führt dabei in dem ersten Reaktor bereits zu einer zufrieden stellenden Ausbeute, ohne dass bei der Umsetzung vorhandene oder entstehende Feststoffe störend wirken. Aufgrund einer bereits zufrieden stellenden Ausbeute für den ersten Teilschritt kann weiterhin die Reaktionsführung in dem/den nachfolgenden Reaktor(en) technisch wenig aufwändig gehalten werden. Für Obergrenzen von 0,75, mehr noch 0,65, noch besser noch von 0,6, ist die bei der Reaktion entstehende Abwärmemenge noch gut kontrollierbar. Außerdem haben der angegebene Bereich von 0,4 bis 0,75 und weiter bevorzugt die engeren Teilbereiche von 0,5 bis 0,65 und noch mehr der Teilbereich von 0,55 bis 0,6 den Vorteil, insgesamt zu besonders wenig Nebenprodukten zu führen. Besonders bevorzugt wird das Verfahren so durchgeführt, dass das mindestens eine Hydriermittel i-Bu₂AlH ist und wobei in dem ersten Reaktor das Molverhältnis von reduziertem zu oxidiertem i-Bu₂AlH einen Wert zwischen 0,5 und 0,65, bevorzugt zwischen 0,55 und 0,6 beträgt

Bevorzugt handelt es sich bei dem ersten Reaktor um einen Rührkesselreaktor (Continuous Stirred-Tank Reactor, CSTR). Mit einem solchen Reaktor können für das zuvor als bevorzugt heraus gestellte Molverhältnis von reduziertem zu oxidiertem Hydriermittel Umsetzungsraten von 50-70 Mol.-% in Bezug auf die Hydrierung der Silanverbindungen erzielt werden. Der Rührkesselreaktor wird weiter bevorzugt mit einem externen Kreislaufführung des Reaktionsgemisches betrieben. Über eine externe Kreislaufführung kann die Reaktionswärme besser abgeführt und durch die höhere Strömungsgeschwindigkeit der Stofftransportvorgang zusätzlich beschleunigt werden.

Dem Rührkesselreaktor können noch ein oder mehrere Reaktoren nachgeschaltet sein, die den Vorteil haben, die Gesamtausbeute zu erhöhen. Bevorzugt handelt es sich bei mindestens einem der dem ersten Reaktor nachgeschalteten Reaktoren um einen Strömungsreaktor. Bevorzugt handelt es sich bei dem oder den nachgeschalteten Strömungsreaktoren um mindestens einen Rohrreaktor, mindestens einen Schlaufenreaktor, mindestens einen Säulenreaktor oder eine Kombination davon. Entsprechende Reaktoren sind technisch einfach zu handhaben, wenig störanfällig und gut wartbar. Weiterhin kann mit ihnen eine Maximierung des Umsatzes, bis hin zu ≥ 95 Mol.-% Ausbeute erzielt werden. Bevorzugt wird ein Rohrreaktor eingesetzt. Er kann auf verschiedene Arten ausgeführt werden. Vorzugsweise kann er als ein leeres Rohr oder ein Rohr mit Einbauten z.B. mit Füllkörpern, statischen Mischern mit und ohne interne Wärmetauscherflächen oder ein Rohr als Wendelrohrreaktor ausgeführt werden.

Die Reduktion des oxidierten Hydriermittels kann prinzipiell beliebig durchgeführt werden. Bevorzugt wird das oxidierte Hydriermittel, insbesondere entstandenes i-Bu₂AlCl mit Natriumhydrid oder Lithiumhydrid unter direkter Bildung des reduzierten Hydriermittels oder mit Na/Mg-Legierungen zunächst zu einer Zwischenstufe umgesetzt und nachfolgend mit H₂ hydriert. Diesbezügliche Vorschriften sind dem Fachmann bekannt und publiziert unter L.I.Zalharkin et al., Izvestiya Akademii Nauk SSSR No. 10, p.p. 1894-1895, 1961 sowie GB 980765 A, US 2,958,703 A, US 3,006,942 A, US 2,838,556 A, US 2,954,388 A und US 3,097,066 A.

Die Reduktion des Hydriermittels kann bis zu einer vollständigen Regenerierung des Hydriermittels durchgeführt werden. Die Reduktion des Hydriermittels muss jedoch nicht bis zu einer vollständigen Regenerierung des Hydriermittels erfolgen, da dies einen hohen apparativen Aufwand erfordert. Bevorzugt wird die Regenerierung des Hydriermittels so durchgeführt, dass das Hydriermittel bis zu einer Ausbeute von mindestens 85 Mol.-% regeneriert wird und für die weitere Verwendung frisches Hydriermittel hinzu dosiert wird.

Die Entnahme des oxidierten Hydriermittels, seine Reduktion und das Zuführen des Produktes der Reduktionsreaktion (d.h. zu Zufuhr von im wesentlichen reduziertem Hydriermittel) kann wiederum selbst im Batchprozess oder kontinuierlich erfolgen. Bevorzugt, weil damit die Gesamtreaktion besonders gut steuerbar wird, erfolgen diese Schritte ebenfalls kontinuierlich.

Bei der Regenerierung des Hydriermittels kann weiterhin, insbesondere im Falle einer Verwendung von Natriumhydrid, ein Anti-Agglomerationsmittel bzw. Rieselhilfsmittel zur Erhöhung der Ausbeute zugegeben werden (vgl. JP 2000-256367 A).

Das erfindungsgemäße Verfahren zur Hydrierung Halogen-haltiger Silanverbindungen lässt sich besonders gut anschließen an ein Verfahren zur Synthese halogenierter Silanverbindungen, bei dem
i) mindestens ein Halogensilan der generischen Formel SiₙX₂ₙ₊₂ (mit n ≥ 2, bevorzugt n ≥ 3, und X = F, Cl, Br und/oder I) und
ii) mindestens ein Katalysator ausgewählt aus der Gruppe der tertiären Phosphane PR₃, der tertären Amine NR₃ und der Gruppe an Verbindungen der generischen Formel

   NRR'ₐR"_{b}Y_{c}

   mit a = 0 oder 1, b = 0 oder 1, und c = 0 oder 1, und Y = 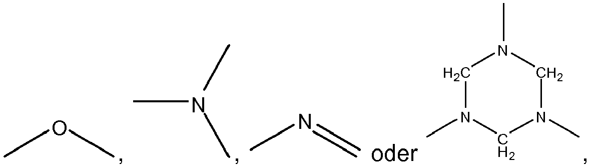 wobei
   aa) - R, R' und/oder R" gleich -C₁-C₁₂-Alkyl, -C₁-C₁₂-Aryl, -C₁-C₁₂-Aralkyl, -C₁-C₁₂-Aminoalkyl, -C₁-C₁₂-Aminoaryl, -C₁-C₁₂-Aminoaralkyl, insbesondere bevorzugt -Ph, -PhCH₃, -PhC₂H₅, -PhC₃H₇, -CH₂(C₆H₄)CH₃, -CH₂(C₆H₄)C₂H₅, -C₂H₄(C₆H₄)C₂H₅, -C₂H₄(C₆H₄)C₃H₇, -C₃H₆(C₆H₄)-C₃H₇, -C₆H₂(CH₃)₃, -C₆H₃(CH₃)₂, -C₈H_{7,} -C₈H₆CH_{3,} -PhNR"'R"", -PhCH₂NR"'R"", -PhC₂H₄NR"'R"", -PhC₃H₆NR"'R"", -CH₂(C₆H₄)CH₂NR"'R"", -CH₂(C₆H₄)C₂H₄NR"'R"", -C₂H₄(C₆H₄)C₂H₄NR'"R"", -C₂H₄(C₆H₄)C₃H₆NR'"R"", -C₃H₆(C₆H₄)-C₃H₆NR'"R"", -CH₂NR'"R"", -C₂H₄NR"'R"", -C₃H₆NR"'R"", - C₄H₈NR'"R"", -C₅H₁₀NR'"R"", -C₆H₁₂NR'"R"", -C₇H₁₄NR"'R"",-C₈H₁₆NR'"R"", -C₉H₁₈NR'"R"" und/oder -C₁₀H₂₀NR"'R"" (mit R'" und R"" = -C₁-C₁₀-Alkyl, -C₁-C₁₀-Aryl und/oder -C₁-C₁₀-Aralkyl) sind,
      und/oder
      - zwei oder drei Reste R, R' und R" im Falle von c = 0 gemeinsam ein N einschließendes cyclisches oder bicyclisches, heteroaliphatisches oder heteraromatisches System bilden,
         insbesondere handelt es sich dabei bevorzugt bei dem cyclischen oder bicyclischen, heteroaliphatischen oder heteraromatischen System um ein Pyrrolidin-, Pyrrol-, Piperidin-, Pyridin-, Hexamethylenimin-, Azatropiliden- oder ein Chinolin-Ringsystem,
      - mit der Maßgabe, dass mindestens ein Rest R, R' oder R" nicht -CH₃ ist und/oder
   bb)- R und R' und/oder R" (im Falle von c = 1) gleich -C₁-C₁₂-Alkylen, -C₁-C₁₂-Arylen, -C₁-C₁₂-Aralkylen, -C₁-C₁₂-Heteroalkylen, -C₁-C₁₂-Heteroarylen, -C₁-C₁₂-Heteroaralkylen und/oder -N=,
      insbesondere bevorzugt -CH₂-, -C₂H₄-, -C₃H₆-, -C₄H₈-, -C₅H₁₀-, -C₆H₁₂-, - C₇H₁₄-, -C₈H₁₆-, -C₉H₁₈-, -C₁₀H₂₀-, -Ph-, -PhCH₂-, -PhC₂H₄-, -PhC₃H₆-, -CH₂(C₆H₄)CH₂-, -CH₂(C₆H₄)C₂H₄-, -C₂H₄(C₆H₄)C₂H₄-, -C₂H₄(C₆H₄)C₃H₆-, -C₃H₆(C₆H₄)C₃H₆-, -C₆H(CH₃)₃-, -C₆H₂(CH₃)₂-, -CH=, -CH=CH-, -N=, - N=CH- und/oder -CH=N-, ist,
      oder
   cc) - (im Falle von a = b = c = 0) R = ≡C-R"' (mit R'" = -C₁-C₁₀-Alkyl, -C₁-C₁₀-Aryl und/oder -C₁-C₁₀-Aralkyl) ist,
   unter Bildung eines Gemisches umfassend mindestens ein Halogensilan der generischen Formel SiₘX₂ₘ₊₂ (mit m > n und X = F, Cl, Br und/oder I) und Siₘ₋ₙX₂₍ₘ₋ₙ₎₊₂ (mit X = F, Cl, Br und/oder I) umgesetzt wird.

Gegenstand der vorliegenden Erfindung sind weiterhin die nach dem erfindungsgemäßen Verfahren herstellbaren Hydridosilanverbindungem, insbesondere die nach dem erfindungsgemäßen Verfahren herstellbaren Hydridosilane, sowie ihre Verwendung zur Herstellung halbleitender, elektronischer oder optoelektronischer Schichten.

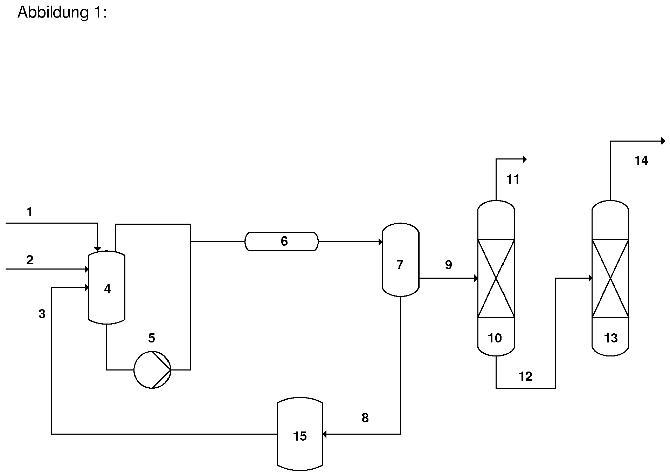

Abbildung 1 zeigt einen beispielhaften Versuchsaufbau.

### Bezugszeichenliste

(1) Zuführung Si₅Cl₁₂
(2) Zuführung von frischen Dibal-H (i-Bu₂AlH)
(3) Zuführung von recycelten Dibal-H (i-Bu₂AlH)
(4) CSTR
(5) Kreislaufpumpe
(6) Strömungsrohrreaktor
(7) Kurzwegverdampfer
(8) Zuführung von Dibal-Cl zum Recycling
(9) Zuführung von Rohprodukt zur Destillation
(10) Destillationskolonne 1
(11) Leichtsiederfraktion
(12) Zuführung von Rohprodukt zur 2. Destillation
(13) Destillationskolonne 2
(14) Wertprodukt

### Beispiel:

### Herstellung von Dodekachlorneopentasilan Si₅Cl₁₂

Die Herstellung von Si₅Cl₁₂ erfolgt in einem Batch-Betrieb in einem Konus-Mischer-Trockner. Im ersten Schritt werden bei 20 °C und 1 bar unter Schutzgasatmosphäre 20 kg eines flüssiges Gemisches von Perchlorsilanen mit überwiegend 3 Siliciumatomen mit 3 kg Hexan und 60 g Diazabicyclo[2.2.2]octan gelöst in 450 g Diethylether versetzt. Das Gemisch reagiert innerhalb von 40 h zum Feststoff Si₅Cl₁₂ und dem Nebenprodukt SiCl₄. Nach dem Reaktionsschritt werden die Leichtsieder (Hexan und Diethylether) und das Nebenprodukt SiCl₄ bei 50 °C unter Vakuum (200 bis 1 mbar) aus dem Reaktionsgemisch abgetrennt und man erhält 16 kg Si₅Cl₁₂.

### Herstellung von Neopentasilan (NPS) und dessen thermischen Aufarbeitung (H-Äquivalent-Anteil des Hydriermittels: 1,1)

Die Hydrierung von Si₅Cl₁₂ mit Diisobutylaluminiumhydrid wird in zwei Reaktionsstufen durchgeführt. Im ersten Reaktor (4, vgl. Abbildung 1), einem kontinuierlich betriebenem Rührkesselreaktor (CSTR) mit externem Kreislauf mit Zwangsumlauf (Pumpe, 5) wird Diisobutylaluminiumhydrid vorgelegt und das recycelte Diisobutylaluminiumhydrid (3) kontinuierlich zudosiert. Damit das Hydriermittel (Diisobutylaluminiumhydrid) konstant in entsprechenden H-Äquivalent-Anteilen (2) nachdosiert. Das Si₅Cl₁₂ (1) wird als Feststoff in den Reaktor (4) kontinuierlich dosiert und die Reaktionstemperatur dabei konstant auf 10 °C gehalten. Der Si₅Cl₁₂-Umsatz beträgt in diesem Reaktionsschritt ca. 65 %. Über eine Füllstandsregelung des CSTR (4) wird ein definierter Volumenstrom über ein Ventil in den nachgeschalteten Strömungsrohrreaktor (6) gefördert, wo ebenfalls eine Reaktionstemperatur von 10 °C eingestellt ist. In dem Strömungsrohrreaktor wird ein Endumsatz von 100 % Si₅Cl₁₂ erreicht.

Im Kurzwegverdampfer (7) wird der Austrag aus der Reaktionsstufe thermisch aufgearbeitet. Ein großer Teil des unverbrauchten Hydriermittels Diisobutylaluminiumhydrid und des abreagierten Hydriermittels Diisobutylaluminiumchlorid wird im Kurzwegverdampfer (7) abgetrennt. Das Kopfprodukt des Kurzwegverdampfers wird in den nachfolgenden Destillationskolonnen aufgereinigt. Man erhält pro Stunde 0.20 kg reines NPS.

Die qualitative Bestimmung der Hydridosilane im Destillat erfolgte mittels GC-MS Analytik. Das Destillat enthält Hydridosilane mit einem Anteil von > 99,0 Flächen %

Gewichtsbezogene Ausbeute (kg/h Hydridosilane als Destillat pro kg/h eingesetztem Perchlorsilangemisch): 16,5 %

Das unverbrauchte bzw. abreagierte Hydrierungsmittel (8) aus dem Kurzwegverdampfer (7) wird mit NaH (15) behandelt und das recycelte Hydrierungsmittel (3) anschließend zum CSTR (4) zurückgeführt.

## Patentansprüche

1. Kontinuierliches Verfahren zum Hydrieren Halogen-haltiger Silanverbindungen mit mindestens drei Siliciumatomen, bei dem
- mindestens eine Halogen-haltige Silanverbindung mit mindestens drei Siliciumatomen und
- mindestens ein Hydriermittel, ausgewählt aus der Gruppe an Verbindungen bestehend aus LiAlH₄, NaBH₄ und i-Bu₂AlH,
- kontinuierlich
unter Bildung
- mindestens einer Hydridosilanverbindung mit mindestens 3 Siliciumatomen und
- oxidierten Hydriermittels
umgesetzt werden, und wobei
- oxidiertes Hydriermittel entnommen, reduziert und das Reaktionsprodukt dieser Reduktionsreaktion der Hydrierung wieder zugeführt wird.

2. Verfahren nach Anspruch 1, **dadurch gekennzeichnet, dass** die Halogen-haltige Silanverbindung die generische Formel SiₙX₂ₙ₊₂ mit 3 ≤ n ≤ 10 und X = F, Cl, Br, I hat.

3. Verfahren nach Anspruch 2, **dadurch gekennzeichnet, dass** die Halogen-haltige Silanverbindung Si₅Cl₁₂ ist.

4. Verfahren nach einem der vorhergehenden Ansprüche, **dadurch gekennzeichnet, dass** der Anteil der mindestens einen Halogen-haltigen Silanverbindung 10 - 30 Gew.-% bezogen auf die Gesamtmasse der zugeführten Komponenten beträgt.

5. Verfahren nach einem der vorhergehenden Ansprüche, **dadurch gekennzeichnet, dass** das Hydriermittel im reduzierten Zustand in H-Äquivalent-Anteilen von 1,0 bis 1,5 bezogen auf die Summe an zu hydrierenden Halogenatomen zudosiert wird.

6. Verfahren nach einem der vorhergehenden Ansprüche, **dadurch gekennzeichnet, dass** für die Umsetzung mindestens zwei in Reihe geschaltete Reaktoren eingesetzt werden.

7. Verfahren nach Anspruch 6, **dadurch gekennzeichnet, dass** in dem ersten Reaktor das Molverhältnis von reduziertem zu oxidiertem Hydriermittel einen Wert zwischen 0,4 und 0,75 beträgt.

8. Verfahren nach Anspruch 6, **dadurch gekennzeichnet, dass** der erste der zwei oder mehr in Reihe geschalteten Reaktoren ein Rührkesselreaktor ist.

9. Verfahren nach Anspruch 6, **dadurch gekennzeichnet, dass** mindestens einer der dem ersten Reaktor nachgeschalteten Reaktoren ein Strömungsreaktor ist.

10. Verfahren nach einem der vorhergehenden Ansprüche, **dadurch gekennzeichnet, dass** es sich anschließt an ein Verfahren zur Synthese halogenierter Silanverbindungen, bei dem
i) mindestens ein Halogensilan der generischen Formel SiₙX₂ₙ₊₂ mit n ≥ 2 und X = F, Cl, Br und/oder I und
ii) mindestens ein Katalysator ausgewählt aus der Gruppe der tertiären Phosphane PR₃, der tertären Amine NR₃ und der Gruppe an Verbindungen der generischen Formel NRR'ₐR"_{b}Y_{c}
mit a = 0 oder 1, b = 0 oder 1, und c = 0 oder 1, und
Y = 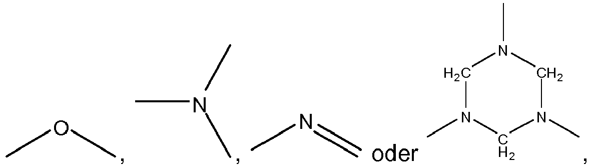 wobei
aa) R, R' und/oder R" gleich -C₁-C₁₂-Alkyl, -C₁-C₁₂-Aryl, -C₁-C₁₂-Aralkyl, -C₁-C₁₂-Aminoalkyl, -C₁-C₁₂-Aminoaryl, -C₁-C₁₂-Aminoaralkyl,
und/oder
zwei oder drei Reste R, R' und R" im Falle von c = 0 gemeinsam ein N einschließendes cyclisches oder bicyclisches, heteroaliphatisches oder heteraromatisches System bilden,
mit der Maßgabe, dass mindestens ein Rest R, R' oder R" nicht -CH₃ ist und/oder
bb) R und R' und/oder R" (im Falle von c = 1) gleich -C₁-C₁₂-Alkylen, -C₁-C₁₂-Arylen, -C₁-C₁₂-Aralkylen, -C₁-C₁₂-Heteroalkylen, -C₁-C₁₂-Heteroarylen, -C₁-C₁₂-Heteroaralkylen und/oder -N=,
oder
cc) (im Falle von a = b = c = 0) R = ≡C-R"' (mit R'" = -C₁-C₁₀-Alkyl, -C₁-C₁₀-Aryl und/oder -C₁-C₁₀-Aralkyl) ist,
unter Bildung eines Gemisches umfassend mindestens ein Halogensilan der generischen Formel SiₘX₂ₘ₊₂ (mit m > n und X = F, Cl, Br und/oder I) und Siₘ₋ₙX₂₍ₘ₋ₙ₎₊₂ (mit X = F, Cl, Br und/oder I) umgesetzt wird.

## Claims

1. Continuous process for hydrogenating halogen-containing silane compounds having at least three silicon atoms, in which
- at least one halogen-containing silane compound having at least three silicon atoms and
- at least one hydrogenating agent selected from the group of compounds consisting of LiAlH₄, NaBH₄ and i-Bu₂AlH
- are converted continuously
to form
- at least one hydridosilane compound having at least 3 silicon atoms and
- oxidized hydrogenating agent,
and wherein
- oxidized hydrogenating agent is withdrawn and reduced, and the reaction product of this reduction reaction is fed back to the hydrogenation.

2. Process according to Claim 1, **characterized in that** the halogen-containing silane compound has the generic formula SiₙX₂ₙ₊₂ where 3 ≤ n ≤ 10 and X = F, Cl, Br, I.

3. Process according to Claim 2, **characterized in that** the halogen-containing silane compound is Si₅Cl₁₂.

4. Process according to any of the preceding claims, **characterized in that** the proportion of the at least one halogen-containing silane compound is 10
- 30% by weight based on the total mass of the components fed in.

5. Process according to any of the preceding claims, **characterized in that** the hydrogenating agent in the reduced state is metered in in H equivalent proportions of 1.0 to 1.5 based on the sum total of halogen atoms to be hydrogenated.

6. Process according to any of the preceding claims, **characterized in that** at least two series-connected reactors are used for the conversion.

7. Process according to Claim 6, **characterized in that** the molar ratio in the first reactor of reduced to oxidized hydrogenating agent is a value between 0.4 and 0.75.

8. Process according to Claim 6, **characterized in that** the first of the two or more series-connected reactors is a stirred tank reactor.

9. Process according to Claim 6, **characterized in that** at least one of the reactors connected downstream of the first reactor is a flow reactor.

10. Process according to any of the preceding claims, **characterized in that** it follows on from a process for synthesizing halogenated silane compounds, in which
i) at least one halosilane of the generic formula SiₙX₂ₙ₊₂ where n ≥ 2 and X = F, Cl, Br and/or I and
ii) at least one catalyst selected from the group of the tertiary phosphines PR₃, the tertiary amines NR₃ and the group of compounds of the generic formula NRR'ₐR"_{b}Y_{c}
where a = 0 or 1, b = 0 or 1, and c = 0 or 1, and
Y = 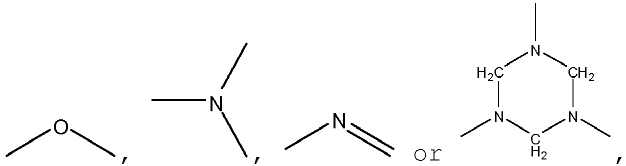 where
aa) R, R' and/or R" is -C₁-C₁₂-alkyl, -C₁-C₁₂-aryl, -C₁-C₁₂-aralkyl, -C₁-C₁₂-aminoalkyl, -C₁-C₁₂-aminoaryl, -C₁-C₁₂-aminoaralkyl, and/or
two or three R, R' and R" radicals, in the case that c = 0, together form a cyclic or bicyclic, heteroaliphatic or heteroaromatic system including N,
with the proviso that at least one R, R' or R" radical is not -CH₃
and/or
bb) R and R' and/or R" (in the case that c = 1) are -C₁-C₁₂-alkylene, -C₁-C₁₂-arylene, - C₁-C₁₂-aralkylene, -C₁-C₁₂-heteroalkylene, - C₁-C₁₂-heteroarylene, -C₁-C₁₂-heteroaralkylene and/or -N=,
or
cc) (in the case that a = b = c = 0) R = ≡C-R"' (where R"' = -C₁-C₁₀-alkyl, -C₁-C₁₀-aryl and/or -C₁-C₁₀-aralkyl),
are converted to form a mixture comprising at least one halosilane of the generic formula SiₘX₂ₘ₊₂ (where m > n and X = F, Cl, Br and/or I) and Siₘ₋ₙX₂₍ₘ₋ₙ₎₊₂ (where X = F, Cl, Br and/or I).

## Revendications

1. Procédé continu d'hydrogénation de composés de silane contenant des halogènes comprenant au moins trois atomes de silicium, selon lequel
- au moins un composé de silane contenant des halogènes comprenant au moins trois atomes de silicium et
- au moins un agent d'hydrogénation, choisi dans le groupe de composés constitué par LiAlH₄, NaBH₄ et i-Bu₂AlH,
sont mis en réaction en continu avec formation
- d'au moins un composé d'hydridosilane comprenant au moins 3 atomes de silicium, et
- d'un agent d'hydrogénation oxydé,
et
- l'agent d'hydrogénation oxydé est extrait, réduit et le produit de réaction de cette réaction de réduction est réintroduit dans l'hydrogénation.

2. Procédé selon la revendication 1, **caractérisé en ce que** le composé de silane contenant des halogènes a la formule générique SiₙX₂ₙ₊₂ avec 3 ≤ n ≤ 10 et X = F, Cl, Br, I.

3. Procédé selon la revendication 2, **caractérisé en ce que** le composé de silane contenant des halogènes est Si₅Cl₁₂.

4. Procédé selon l'une quelconque des revendications précédentes, **caractérisé en ce que** la proportion dudit au moins un composé de silane contenant des halogènes est de 10 à 30 % en poids par rapport à la masse totale des composants introduits.

5. Procédé selon l'une quelconque des revendications précédentes, **caractérisé en ce que** l'agent d'hydrogénation est ajouté à l'état réduit en proportions d'équivalents de H de 1,0 à 1,5 par rapport à la somme des atomes d'halogène à hydrogéner.

6. Procédé selon l'une quelconque des revendications précédentes, **caractérisé en ce qu'**au moins deux réacteur raccordés en série sont utilisés pour la réaction.

7. Procédé selon la revendication 6, **caractérisé en ce que** le rapport molaire entre l'agent d'hydrogénation réduit et oxydé dans le premier réacteur a une valeur comprise entre 0,4 et 0,75.

8. Procédé selon la revendication 6, **caractérisé en ce que** le premier des deux réacteurs ou plus raccordés en série est un réacteur à cuve agitée.

9. Procédé selon la revendication 6, **caractérisé en ce qu'**au moins un des réacteurs raccordés en aval du premier réacteur est un réacteur à écoulement.

10. Procédé selon l'une quelconque des revendications précédentes, **caractérisé en ce qu'**il suit un procédé de synthèse de composés de silane halogénés, selon lequel
i) au moins un halogénosilane de formule générique SiₙX₂ₙ₊₂ avec n ≥ 2 et X = F, Cl, Br et/ou I, et
ii) au moins un catalyseur choisi dans le groupe constitué par les phosphanes tertiaires PR₃, les amines tertiaires NR₃ et le groupe de composés de formule générique NRR'ₐR"_{b}Y_{c},
avec a = 0 ou 1, b = 0 ou 1 et c = 0 ou 1, et
Y = 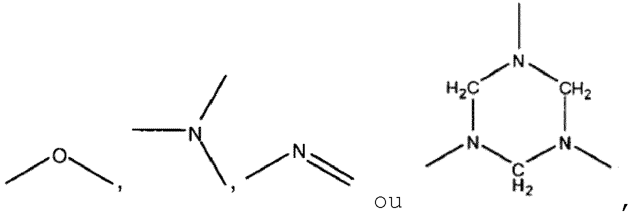 avec
aa) R, R' et/ou R" représentant alkyle en C₁-C₁₂, aryle en C₁-C₁₂, aralkyle en C₁-C₁₂, aminoalkyle en C₁-C₁₂, aminoaryle en C₁-C₁₂, aminoaralkyle en C₁-C₁₂,
et/ou
deux ou trois radicaux R, R' et R" dans le cas de c = 0 formant ensemble un système cyclique ou bicyclique, hétéroaliphatique ou hétéroaromatique incluant un N,
à condition qu'au moins un radical R, R' ou R" ne représente pas -CH₃,
et/ou
bb) R et R' et/ou R" (dans le cas de c = 1) représentant alkylène en C₁-C₁₂, arylène en C₁-C₁₂, aralkylène en C₁-C₁₂, hétéroalkylène en C₁-C₁₂, hétéroarylène en C₁-C₁₂, hétéroaralkylène en C₁-C₁₂ et/ou -N=,
ou
cc) (dans le cas de a = b = c = 0) R = ≡C-R"' (avec R"' = alkyle en C₁-C₁₀, aryle en C₁-C₁₀ et/ou aralkyle en C₁-C₁₀),
sont mis en réaction avec formation d'un mélange comprenant au moins un halogénosilane de formule générique SiₘX₂ₘ₊₂ (avec m > n et X = F, Cl, Br et/ou I) et Siₘ₋ₙX₂₍ₘ₋ₙ₎₊₂ (avec X = F, Cl, Br et/ou I).
